# EUROPÄISCHE PATENTANMELDUNG

(11) **EP 1 195 414 A1**
(43) Veröffentlichungstag der Anmeldung: **10.04.2002**
(21) Anmeldenummer: 01122052.2
(22) Anmeldetag: 14.09.2001
(51) Int. Cl.: C09B 67/00, C09B 67/20

(54) **Verfahren zur Herstellung von flüssigen Pigmentpräparationen**

(30) Priorität: 05.10.2000 DE 10049202
(71) Anmelder: Clariant GmbH, 65929 Frankfurt am Main (DE)
(72) Erfinder: Dietz, Erwin, Dr., 61462 Königstein (DE); Weber, Joachim, Dr., 65929 Frankfurt am Main (DE); Schnaitmann, Dieter, Dr., 65817 Eppstein (DE); Wille, Christian, Dr., 69469 Weinheim (DE); Unverdorben, Leonhard, Dr., 61130 Nidderau (DE)
(74) Vertreter: Hütter, Klaus, Dr.

(57) **Zusammenfassung**

Gegenstand der Erfindung ist ein Verfahren zur Herstellung von flüssigen Pigmentpräparationen, dadurch gekennzeichnet, dass man eine 10 bis 80 gew.-%ige Suspension eines Rohpigments, Präpigments und/oder Pigments, bezogen auf das Gesamtgewicht der Suspension, in einem flockungsstabilisierenden, flüssigen Medium, in einem Mikrojetreaktor durch Düsen in einem von einem Gehäuse umschlossenen Reaktorraum auf einen gemeinsamen Kollisionspunkt spritzt, wobei über eine Öffnung im Gehäuse in den Reaktorraum ein Gas oder eine verdampfende Flüssigkeit zur Aufrechterhaltung einer Gasatmosphäre im Reaktorraum eingeleitet wird und die entstehende flüssige Pigmentpräparation und das Gas oder die verdampfte Flüssigkeit durch eine weitere Öffnung im Gehäuse durch Überdruck auf der Gaseintrittsseite oder durch Unterdruck auf der Produkt- und Gasaustrittsseite aus dem Reaktor entfernt wird.

## Beschreibung

Die vorliegende Erfindung beschreibt ein umweltfreundliches und wirtschaftliches Verfahren zur Herstellung von flüssigen Pigmentpräparationen.

Pigmentpräparationen sind Dispersionen von Pigmenten in flockungsstabilisierenden, flüssigen Medien. Außer dem Pigment und dem flockungsstabilisierenden, flüssigen Medium können noch Hilfsmittel enthalten sein. Die Pigmente sind im flockungsstabilisierenden, flüssigen Medium dispergiert und von diesem vollständig umhüllt. Die flockungsstabilisierenden, flüssigen Medien sind mit dem vorgesehenen Anwendungsmedium ähnlich bzw. gut verträglich. Die Pigmente sind in den Pigmentpräparationen in höheren Konzentrationen enthalten als im späteren Anwendungsmedium.
Pigmentpräparationen dienen als Farbmittel zum Pigmentieren von hochmolekularen Materialien, wie Lacken, Dispersionsfarben, Tinten wie beispielsweise Ink-Jet Tinten, Druckfarben, Kunststoffen und Druckfarben für den Textildruck. Beim Einarbeiten von Pigmenten in diese Medien treten häufig Schwierigkeiten auf, da sich zahlreiche Pigmente im Anwendungsmedium nur unter hohem Aufwand in einen dispergierten Zustand mit befriedigenden anwendungstechnischen Eigenschaften bringen lassen. Wenn die Pigmentteilchen zu grobteilig sind, lassen sich keine brauchbaren Ergebnisse erzielen, beispielsweise wird die optimale Farbstärke nicht erreicht. Während und nach einem Dispergiervorgang können Flockungserscheinungen auftreten, die zu Viskositätsänderungen des Anwendungsmediums, zu Farbtonänderungen und Verlusten an Farbstärke, Deckvermögen, Glanz, Homogenität und Brillanz bei den gefärbten Materialien führen. Diese Schwierigkeiten können durch den Einsatz geeigneter Pigmentpräparationen vermieden werden. Pigmentpräparationen lassen sich normalerweise mit geringem Verteilungs- und Mischaufwand und ohne ökologische Probleme in die flockungsstabilisierenden, flüssigen Medien einarbeiten und zeichnen sich in vielen Anwendungsmedien durch hervorragende coloristische und rheologische Eigenschaften sowie durch günstiges Flockungs- und Absetzverhalten aus.

Für die Herstellung von Pigmentpräparationen werden normalerweise feinteilige Pigmente eingesetzt. Die Einarbeitung in die flockungsstabilisierenden, flüssigen Medien erfolgt hierbei durch Dispergierung in Rollmühlen, Schwingmühlen, Rührwerkskugelmühlen mit niedriger und hoher Energiedichte, Mischern, Walzenstühlen oder Knetern. Der verwendete Dispergierapparat ist abhängig von der Dispergierbarkeit des eingesetzten Pigments, dem flockungsstabilisierenden, flüssigen Medium und den Hilfsmitteln. In einigen Fällen werden auch die grobkristallinen Rohpigmente eingesetzt. Dabei werden Feinverteilung und Dispergierung in einfacher Weise miteinander kombiniert und es entfällt die aufwendige Feinverteilung der grobkristallinen Rohpigmente in flockungsinstabilen Medien und der Finish.
Bei den bislang bekannten Verfahren wird die Energie mechanisch eingetragen, der größte Teil der Energie wird in Wärme umgewandelt, nur ein Bruchteil der eingetragenen Energie wird effektiv zur Mahlung und Feinverteilung verwendet. Bei Verwendung von Mahlhilfsmitteln wie Kugeln kommt es zu Abrieb und damit zu Kontamination des Produkts durch Fremdstoffe. Der scale-up von neuen Produkten vom Labormaßstab in den großtechnischen Maßstab ist oft aufwendig und kann Schwierigkeiten bereiten, da beispielsweise der Eintrag der mechanischen Energie, die Übertragung der Energie zur effektiven Mahlung, der Energieverlust durch Erzeugung von Wärme und die notwendige Abfuhr der Wärme stark von den Apparategeometrien und -größen abhängen und damit auch die Wirtschaftlichkeit des Verfahrens im großtechnischen Maßstab mitbestimmen.

Die EP-A-0 753 544 beschreibt ein Verfahren zur Herstellung von Pigmentpräparationen durch Nassmahlung mit Rührwerkskugelmühlen mit hoher Energiedichte. Durch den Einsatz von Mahlkörpern kommt es zu Abrieb und damit zur Kontamination des Produkts durch Fremdstoffe.

Der vorliegenden Erfindung lag die Aufgabe zugrunde, ein universell einsetzbares, kostengünstiges, technisch zuverlässiges und wirtschaftliches Verfahren zur Herstellung von Pigmentpräparationen auf Basis von Pigmenten unterschiedlicher Klassen und unterschiedlicher flockungsstabilisierender, flüssiger Medien für verschiedene Anwendungsgebiete zu entwickeln, bei dem ein unproblematischer scale-up möglich ist und bei dem auch keine Kontamination durch Fremdstoffe stattfinden kann.

Es wurde gefunden, dass die erfindungsgemäße Aufgabe überraschenderweise durch Einsatz eines Mikrojetreaktors gelöst wird.

Gegenstand der vorliegenden Erfindung ist ein Verfahren zur Herstellung von flüssigen Pigmentpräparationen dadurch gekennzeichnet, dass man eine 10 bis 80 gew.-%ige, vorzugsweise 20 bis 60 gew.-%ige, insbesondere 30 bis 50 gew.-%ige, Suspension eines Rohpigments, Präpigments und/oder Pigments, bezogen auf das Gesamtgewicht der Suspension, in einem flockungsstabilisierenden, flüssigen Medium, in einem Mikrojetreaktor zweckmäßigerweise über eine oder mehrere Pumpen, vorzugsweise Hochdruckpumpen, durch Düsen in einem von einem Gehäuse umschlossenen Reaktorraum auf einen gemeinsamen Kollisionspunkt spritzt, wobei über eine Öffnung im Gehäuse in den Reaktorraum ein Gas oder eine verdampfende Flüssigkeit zur Aufrechterhaltung einer Gasatmosphäre im Reaktorraum, insbesondere im Kollisionspunkt der Suspensionsstrahlen, gegebenenfalls auch zur Kühlung, eingeleitet wird und die entstehende flüssige Pigmentpräparation und das Gas oder die verdampfte Flüssigkeit durch eine weitere Öffnung im Gehäuse durch Überdruck auf der Gaseintrittsseite oder durch Unterdruck auf der Produkt- und Gasaustrittsseite aus dem Reaktor entfernt wird.

Für die erfindungsgemäße Herstellung der flüssigen Pigmentpräparationen ist eine hohe Mahl- und Dispergierwirkung erforderlich. Dies wird dadurch erreicht, dass die eingesetzten Suspensionen unter einem Druck von mindestens 50 bar, bevorzugt mindestens 500 bar, insbesondere von 500 bis 5000 bar, in den Reaktorraum gespritzt werden.

Um Materialverschleiß an den inneren Oberflächen des Gehäuses zu vermeiden, wird der Kollisionspunkt in den materialfernen Gasraum verlegt. Unter "materialfern" wird dabei verstanden, dass in der Umgebung des Kollisionspunkts der Strahlen durch das eingeleitete Gas oder die verdampfende Flüssigkeit eine Gasatmosphäre aufrechterhalten wird. Dies bedeutet, dass der Kollisionspunkt, in dem die Strahlen aufeinandertreffen, nicht an einer Gefäßwand oder einer Rohrwand anliegt. Dadurch wird Materialverschleiß verhindert, der dort auftreten würde, wo Kavitation an Materialwänden stattfindet. Zu Kavitation kommt es besonders bei Einsatz von hohen Drücken, insbesondere bei Drücken über 3000 bar. Des weiteren werden die kollidierenden Strahlen durch die Gasatmosphäre vor ihrem Zusammenprall nicht abgebremst, wie es beispielsweise der Fall wäre, wenn sie durch eine Flüssigkeit passieren müssten.

Das Material der Düsen soll möglichst hart und dadurch verschleißarm sein, es kommen beispielsweise Keramiken, wie Oxide, Carbide, Nitride oder Mischverbindungen daraus in Betracht, wobei vorzugsweise Aluminiumoxid, insbesondere als Saphir oder Rubin, eingesetzt wird, aber auch Diamant besonders geeignet ist. Es kommen als Hartstoffe auch Metalle, insbesondere gehärtete Metalle, in Betracht. Die Bohrungen der Düsen haben Durchmesser von kleiner als 2 mm, vorzugsweise kleiner 0,5 mm und insbesondere kleiner als 0,4 mm.

Der Mikrojetreaktor kann prinzipiell als Zwei-, Drei- oder Mehrstrahlreaktor ausgeführt sind, bevorzugt ist eine Zweistrahl-Ausführung. Bei einer Anordnung mit zwei Strahlen treffen die Strahlen bevorzugt frontal (Winkel zwischen den Strahlen 180°) aufeinander, bei einer Dreistrahl-Anordnung ist ein Winkel von 120° zwischen den Strahlen zweckmäßig. Günstigerweise können die Düsen in einer auf den gemeinsamen Kollisionspunkt justierbaren Vorrichtung gelagert sein.

In einer besonders bevorzugten Ausführungsform des erfindungsgemäßen Verfahrens werden die Suspensionsstrahlen mittels einer Hochdruckpumpe durch zwei sich gegenüberstehende Düsen frontal aufeinander gespritzt.

Die Temperaturen der zugeführten Suspensionen liegen zweckmäßigerweise im Bereich von -50 bis 250°C, vorzugsweise von 0 bis 180°C, besonders zwischen 0 und 100°C, insbesondere zwischen 10 bis 80°C. Es kann auch über dem Siedepunkt des flockungsstabilisierenden, flüssigen Mediums unter Druck gearbeitet werden.

Falls erforderlich, kann mit dem eingeleiteten Gas oder der verdampfenden Flüssigkeit, die für die Aufrechterhaltung der Gasatmosphäre im Gehäuseinneren verwendet wird, gekühlt werden. Es kann auch über eine zusätzliche Bohrung im Gehäuse eine verdampfende Kühlflüssigkeit oder ein Kühlgas in den Reaktorraum eingeleitet werden. Dabei kann der Aggregatszustand des Kühlmediums temperatur- und/oder druckbedingt sein. Es kann sich beispielsweise um Luft, Stickstoff, Kohlendioxid oder andere, inerte Gase oder Flüssigkeiten mit geeignetem Siedepunkt unter erhöhtem Druck handeln. Dabei ist es möglich, dass der Übergang des Kühlmediums vom flüssigen in den gasförmigen Zustand im Reaktor selbst dadurch stattfindet, dass die bei der Mahlung freiwerdende Wärme den Wechsel des Aggregatzustandes bewirkt. Es ist auch möglich, dass die Verdunstungskälte eines sich entspannenden Gases zur Kühlung genutzt wird.
Das den Reaktorraum umschließende Gehäuse kann auch thermostatierbar ausgelegt werden und zur Kühlung verwendet werden; oder das Produkt kann nach Austritt aus dem Gehäuse gekühlt werden. Es kann beispielsweise der Druck im Reaktorraum mittels eines Druckhalteventils eingestellt und gehalten werden, so dass das verwendete Gas in flüssigem oder über- oder unterkritischem Zustand vorliegt. So kann beispielsweise die Verdunstungskälte eines Gases genutzt werden.
Wenn bei erhöhter Temperatur gearbeitet werden soll, kann die für die Erwärmung erforderliche Energie vor dem Austritt aus den Düsen der Suspension, beispielsweise in den zuführenden Leitungen, oder über das thermostatierbare Gehäuse oder über das eingeleitete Gas zugeführt werden. Die gewählte Temperatur kann grundsätzlich wegen der hohen Drücke in den Hochdrucklanzen auch erheblich über dem Siedepunkt des flüssigen Mediums liegen. Als flüssiges Medium kommen daher auch solche in Frage, die bei der Temperatur der Mahlung im Gehäuseinneren unter Normaldruck als Gase vorliegen.

Ist die Mahlintensität zu gering, so wird die gewünschte Feinverteilung nicht erreicht. Gegebenenfalls kann daher die Suspension auch mit mehr als einer Passage durch den Mikrojetreaktor gepumpt werden. Es kann auch im Kreislauf gemahlen werden. Die Anzahl der Passagen bzw. die Mahldauer bei Kreislaufmahlung ist abhängig von den Feinheitsanforderungen für das jeweilige Anwendungsgebiet. Normalerweise reichen 1 bis 15 Passagen, vorzugsweise 1 bis 10, insbesondere 1 bis 7, Passagen.

Für das erfindungsgemäße Verfahren können prinzipiell alle organischen und anorganischen Pigmente eingesetzt werden, beispielsweise organische Pigmente wie Perylen-, Perinon-, Chinacridon-, Chinacridonchinon-, Anthrachinon-, Anthanthron-, Benzimidazolon-, Disazokondensations-, Azo-, Indanthron-, Phthalocyanin-, Triarylcarbonium-, Dioxazin-. wie beispielsweise Triphendioxazin, Aminoanthrachinon-, Diketopyrrolopyrrol-, Indigo-, Thioindigo-, Thiazinindigo-, lsoindolin-, Isoindolinon-, Pyranthron-, Isoviolanthron-, Flavanthron-, Anthrapyrimidin- oder Carbon Black-Pigmente (Ruß), Mischkristalle oder Mischungen davon; oder anorganische Pigmente wie beispielsweise Titandioxid-, Zinksulfid-, Zinkoxid-, Eisenoxid-, Chromoxid-, Mischmetalloxid- (wie beispielsweise Nickelrutilgelb, Chromrutilgelb, Kobaltblau, Kobaltgrün, Zinkeisenbraun, Spinelschwarz), Cadmium-, Wismuth-, Chromat-, Ultramarin-, Eisenblaupigmente und Mischungen daraus (siehe Buxbaum, Industrial Inorganic Pigments, Wiley-VCH, 1998), und Mischungen aus anorganischen und organischen Pigmenten. Es werden zweckmäßigerweise die bei ihrer Synthese oder bei ihrer Reinigung grobkristallin anfallenden Rohpigmente, Mischungen dieser Rohpigmente, Pigmentzubereitungen dieser Rohpigmente, oberflächenbehandelte Rohpigmente oder grobkristalline Mischkristallrohpigmente eingesetzt, insbesondere grobkristalline Chinacridonrohpigmente der beta- oder der gamma-Phase, grobkristalline Chinacridonmischkristallrohpigmente, grobkristalline Kupferphthalocyaninrohpigmente der alpha- oder beta-Phase, grobkristalline chlorierte Kupferphthalocyanine, grobkristalline Dioxazin-, Perylen-, Indanthron-, Perinon-, Chinacridonchinon-, Anthrachinon-, Aminoanthrachinon- und Anthanthronrohpigmente.
Unter grobkristallinen Rohpigmenten werden solche Rohpigmente verstanden, die erst nach einer Zerkleinerung der Teilchen zum Pigmentieren von organischen Materialien geeignet sind. In den meisten Fällen sind dies solche mit einer mittleren Teilchengröße D₅₀ von mehr als 1 µm.
Es können auch bereits feinverteilte, aber stark agglomerierte und damit schwer dispergierbare Präpigmente oder schwer dispergierbare Pigmente oder auch Mischungen von grobkristallinen Rohpigmenten, Präpigmenten und Pigmenten eingesetzt werden. Selbstverständlich ist es auch möglich, leicht dispergierbare Pigmente, Präpigmente oder Rohpigmente nach dem erfindungsgemäßen Verfahren in Pigmentpräparationen zu überführen.

Das Dispergierverhalten eines Pigments ist sein Verhalten beim Dispergieren hinsichtlich der Änderung verschiedener Kriterien des Dispersionszustands (beispielsweise Teilchengröße, Farbstärke, Glanz) in Abhängigkeit von verschiedenen Einflussgrößen (Dispergiergerät, Dispergierverfahren, Dispergierzeit, Mahlgutzusammensetzung).
Zur Beurteilung des Dispergierverhaltens von schwer dispergierbaren Pigmenten wird hauptsächlich die Farbstärke herangezogen. Sie nimmt mit steigender Güte des Dispersionszustands und mit zunehmender Teilchenfeinheit zu. Deshalb kann auch der mittlere Teilchendurchmesser (D₅₀) für die Beurteilung der Dispergierbarkeit herangezogen werden. Das Prüfmedium und die Dispergierbedingungen werden je nach Anwendungsbereich des Pigments vorher festgelegt. Als Maßzahl dient der zur Erzielung einer bestimmten mittleren Teilchengröße erforderliche Dispergieraufwand (Dispergierzeit). Die mittlere Teilchengröße ist abhängig von dem jeweils eingesetzten Pigment. Nur bei gleichen Dispergierbedingungen sind die erhaltenen Kennzahlen vergleichbar. Wenn der höchstzulässige Wert unter Standarddispergierbedingungen (tmax = 240 Min.) überschritten wird, ist dieses Pigment schwer dispergierbar und für den Einsatz zur Herstellung von Pigmentpräparationen auf einer herkömmlichen Rührwerkskugelmühle nicht geeignet.
Als schwer dispergierbare Präpigmente gelten beispielsweise-Dioxazin-, Phthalocyanin-, Anthanthron-, Perylen- und Chinacridonpräpigmente. Als schwer dispergierbare Pigmente gelten Azo-, Dioxazin-, Phthalocyanin-, Anthanthron-, Perylen-, Chinacridon-, Diketopyrrolopyrrol-, Isoindolinon- und Isoindolinpigmente.

Unter einem flockungsstabilisierenden, flüssigen Medium wird ein Medium verstanden, das die Reagglomeration der dispergierten Pigmentteilchen in der Dispersion verhindert. Die Flockungsbeständigkeit wird bestimmt durch den "Rubout"-Test, bei dem der Farbstärkeunterschied oder die Farbtondifferenz der flockulierten und deflockulierten Probe bestimmt wird. Ein flockungsstabilisierendes, flüssiges Medium im Sinne der vorliegenden Erfindung bewirkt einen Farbstärkeunterschied von kleiner als 10%. Die Bestimmung der Farbstärke erfolgt dabei nach DIN 55986.
Das flockungsstabilisierende, flüssige Medium besteht aus einem oder mehreren Trägermaterialien, und gegebenenfalls aus Wasser und/oder einem oder mehreren der nachstehend genannten organischen Lösemittel.
Als Trägermaterialien kommen beispielsweise in Betracht: pigmentäre und nichtpigmentäre Dispergiermittel; Harze, wie Novolake, Alkydmelaminharze, Acrylmelaminharze oder Polyurethanharze; Weichmacher, wie Diisodecylphthalat oder Dioctylphthalat.

Als nichtpigmentäre Dispergiermittel sind beispielsweise Tenside von Interesse. Als Tenside kommen anionische oder anionaktive, kationische oder kationaktive und nichtionische Substanzen oder Mischungen dieser Mittel in Betracht. Bevorzugt sind solche Tenside oder Mischungen von Tensiden, die bei der Mahlung nicht schäumen.
Als anionaktive Substanzen kommen beispielsweise Fettsäuretauride, Fettsäure-N-methyltauride, Fettsäureisethionate, Alkylphenylsulfonate, Alkylnaphthalinsulfonate, Alkylphenolpolyglykolethersulfate, Fettalkoholpolyglykolethersulfate, Fettsäureamidpolyglykolethersulfate, Alkylsulfosuccinamate, Alkenylbernsteinsäurehalbester, Fettalkoholpolyglykolethersulfosuccinate, Alkansulfonate, Fettsäureglutamate, Alkylsulfosuccinate, Fettsäuresarkoside; Fettsäuren, beispielsweise Palmitin-, Stearin- und Ölsäure; Seifen, beispielsweise Alkalisalze von Fettsäuren, Naphthensäuren und Harzsäuren, beispielsweise Abietinsäure, alkalilösliche Harze, beispielsweise-kolophoniummodifizierte Maleinatharze und Kondensationsprodukte auf Basis von Cyanurchlorid, Taurin, N,N'-Diethylaminopropylamin und p-Phenylendiamin in Betracht. Besonders bevorzugt sind Harzseifen, d.h. Alkalisalze von Harzsäuren.

Als kationaktive Substanzen kommen beispielsweise quaternäre Ammoniumsalze, Fettaminoxalkylate, oxalkylierte Polyamine, Fettaminopolyglykolether, Fettamine, von Fettaminen oder Fettalkoholen abgeleitete Di- und Polyamine und deren Oxalkylate, von Fettsäuren abgeleitete Imidazoline, und Salze dieser kationenaktiven Substanzen, wie beispielsweise Acetat, in Betracht.
Als nichtionogene Substanzen kommen beispielsweise Aminoxide, Fettalkoholpolyglykolether, Fettsäurepolyglykolester, Betaine, wie Fettsäureamid-N-propyl-betaine, Phosphorsäureester von aliphatischen und aromatischen Alkoholen, Fettalkoholen oder Fettalkoholpolyglykolethern, Fettsäureamidethoxylate, Fettalkohol-alkylenoxid-Addukte und Alkylphenolpolyglykolether in Betracht. Insbesondere sind Fettaminpolyglykolether, Fettsäuretauride, Fettalkoholpolyglykolether, Fettsäurepolyglykolester, Fettsäure-N-methyltauride, Fettsäuresarkoside, Fettsäureisethionate, Alkylphenolpolyglykolether, Alkylnaphthalinsulfonate, Alkylphenylsulfonate, Alkylphenolpolyglykolethersulfate, Fettalkoholpolyglykolethersulfate und Fettaminacetate von Interesse.

Weiterhin sind mit nichtpigmentären Dispergiermitteln Substanzen gemeint, die strukturell nicht durch chemische Modifikation von organischen Pigmente abgeleitet sind. Sie werden auch bei anderen Verfahren als Dispergiermittel verwendet, beispielsweise können sie bereits bei der Herstellung von Pigmenten, oft aber auch bei der Einarbeitung der Pigmente in die zu färbenden Anwendungsmedien, beispielsweise bei der Herstellung von Lacken oder Druckfarben durch Dispergierung der Pigmente in den entsprechenden Bindemitteln, zugegeben werden. Es können polymere Substanzen, beispielsweise Polyolefine, Polyester, Polyether, Polyamide, Polyimine, Polyacrylate, Polyisocyanate, Block-Copolymere daraus, Copolymere aus den entsprechenden Monomeren, oder Polymere einer Klasse, die mit wenigen Monomeren einer anderen Klasse modifiziert sind, sein. Diese polymeren Substanzen tragen polare Ankergruppen wie beispielsweise Hydroxy-, Amino-, Imino- und Ammoniumgruppen, Carbonsäure- und Carboxylatgruppen, Sulfonsäure- und Sulfonatgruppen oder Phosphonsäure- und Phosphonatgruppen, und können auch mit aromatischen, nicht pigmentären Substanzen modifiziert sein. Nichtpigmentäre Dispergiermittel können des weiteren auch chemisch mit funktionellen Gruppen modifizierte aromatische, nicht von organischen Pigmenten abgeleitete Substanzen sein. Derartige nichtpigmentäre Dispergiermittel sind dem Fachmann bekannt und zum Teil im Handel erhältlich (z.B. Solsperse® , Avecia; Disperbyk® , Byk, Efka® , Efka). Es sollen im Folgenden stellvertretend einige Typen genannt werden, zum Einsatz können jedoch prinzipiell beliebige andere, beschriebene Substanzen kommen, beispielsweise Kondensationsprodukte aus Isocyanaten und Alkoholen, Di- oder Polyolen, Aminoalkoholen oder Di- oder Polyaminen, Polymere aus Hydroxycarbonsäuren, Copolymere aus Olefinenmonomeren oder Vinylmonomeren und ethylenisch ungesättigten Carbonsäuren/-estern, Urethan-haltige Polymere von ethylenisch ungesättigten Monomeren, Urethan-modifizierte Polyester, Kondensationsprodukte auf Basis von Cyanurhalogeniden, Nitroxylverbindungen enthaltende Polymere, Polyesteramide, modifizierte Polyamide, modifizierte Acrylpolymere, Kammdispergiermittel aus Polyestern und Acrylpolymeren, Phosphorsäureester, von Triazin abgeleitete Polymere, modifizierte Polyether, oder von aromatischen, nichtpigmentären Substanzen abgeleitete Dispergiermittel. Dabei werden diese Grundstrukturen vielfach weiter modifiziert, beispielsweise durch chemische Umsetzung mit weiteren, funktionelle Gruppen tragenden Substanzen oder durch Salzbildung.

Mit pigmentären Dispergiermittel sind Pigmentdispergatoren gemeint, die sich von einem organischen Pigment als Grundkörper ableiten und durch chemische Modifizierung dieses Grundkörpers hergestellt werden, beispielsweise saccharinhaltige Pigmentdispergatoren, piperidylhaltige Pigmentdispergatoren, von Naphthalen oder Perylen abgeleitete Pigmentdispergatoren, Pigmentdispergatoren mit funktionellen Gruppen, die über eine Methylengruppe mit dem Pigmentgrundkörper verknüpft sind, mit Polymeren chemisch modifizierte Pigmentgrundkörper, sulfosäuregruppenhaltige Pigmentdispergatoren, sulfonamidgruppenhaltige Pigmentdispergatoren, Ethergruppen haltige Pigmentdispergatoren, oder Carbonsäure-, Carbonsäureester- oder Carbonamidgruppen haltige Pigmentdispergatoren.

Als organische Lösemittel des flockungsstabilisierenden, flüssigen Mediums im Sinne der vorliegenden Erfindung kommen, gegebenenfalls mit Wasser mischbare, Alkohole, Glykole und Glykolether, wie Ethanol, Ethylenglykol, Propylenglykol, Butylenglykol, Diethylenglykol, Triethylenglykol, Ethylenglykoldimethylether oder Glycerin; Polyglykole, wie Polyethylenglykole oder Polypropylenglykole; Polyole; Polyetherpolyole; aromatische Lösemittel, wie beispielsweise white spirit; Ketone, wie beispielsweise Methylethylketon; oder Ester, wie beispielsweise Butylester; in Betracht.

In dem flockungsstabilisierenden, flüssigen Medium sind gegebenenfalls noch ein oder mehrere Hilfsmittel, wie beispielsweise Füllstoffe, Stellmittel, Wachse, Entschäumer, Extender, Konservierungsmittel, Trocknungsverzögerungsmittel, beispielsweise Zucker, wie Rohrzucker, oder Harnstoffe, Additive zur Steuerung der Rheologie, Netzmittel, Antioxidantien, UV-Absorber, Lichtstabilisatoren, oder eine Kombination davon, in einer Menge von 0 bis 30 Gew.-%, bezogen auf das Gesamtgewicht der flüssigen Pigmentpräparation, enthalten.

Beispielsweise sind Wasser als solches, einwertige Alkohole, Ketone oder deren Mischungen mit Wasser ohne Trägermaterial keine flockungsstabilisierenden, flüssigen Medien im Sinne der vorliegenden Erfindung.

Das erfindungsgemäße Verfahren kann bei beliebigen pH-Werten durchgeführt werden, beispielsweise bevorzugt man neutrale bis alkalische pH-Werte bei wässrigen Präparationen, die für Dispersionsfarben eingesetzt werden.

Die Pigmentpräparationen werden in Form von flüssigen Dispersionen, Teigen oder Pasten erhalten. Die Viskosität kann in weiten Bereichen variieren, vorzugsweise beträgt sie 0,01 bis 35 Pas, besonders bevorzugt 0,05 bis 25 Pas, insbesondere 0,05 bis 10 Pas. Entscheidend ist lediglich, dass die Pigmentpräparation noch förderbar ist.

Die Anzahl der Passagen ist abhängig von der Feinheitsanforderung für das jeweilige Anwendungsgebiet wie beispielsweise das Lack-, Druck- oder Kunststoffgebiet.

Unter Ausnutzung der zur Verfügung stehenden Variationsmöglichkeiten lassen sich Pigmentpräparationen für verschiedene Verwendungszwecke herstellen. Dies kann gesteuert werden über die Art des Rohpigments, des Präpigments oder Pigments, die Art des Trägermaterials, des Lösemittels und der Hilfsmittel, sowie durch deren Konzentration, der Anzahl der Passagen und der Temperatur.

Die Herstellung von Pigmentpräparationen nach dem erfindungsgemäßen Verfahren hat sich als besonders wirtschaftlich und umweltfreundlich erwiesen, weil dabei keine Verschmutzung der Luft aufgrund von Staubentwicklung auftritt. Außerdem werden nur geringe Mengen an Chemikalien und Lösemitteln eingesetzt, welche anschließend weiterverarbeitet werden können. Somit treten keine Entsorgungsprobleme auf.
Beim Einsatz von grobkristallinen Rohpigmenten entfällt die herkömmliche aufwendige Feinverteilung und der Lösemittelfinish zur Überführung in die Pigmentform. Die durch den bislang nötigen Lösemittelfinish bedingten Lösemittelverluste werden vermieden, und aufwendige Apparaturen für den Lösemittelfinish und die Lösemittelregeneration werden nicht benötigt.
Wird in wässrigem oder wässrig-organischem Medium gemahlen, so können die feuchten Roh- oder Präpigmente eingesetzt werden. Dadurch entfällt eine teure Trocknung. Weil für alle Einsatzgebiete der gleiche Feinverteilungsapparat eingesetzt wird, entfällt die unwirtschaftliche Vorhaltung verschiedenartiger Feinverteilungsapparate.

Es war überraschend und nicht vorhersehbar, dass die Herstellung von flüssigen Pigmentpräparationen durch den Zusammenprall von Strahlen in einem Mikrojetreaktor in dieser einfachen und technisch unkomplizierten Weise ohne ökologische Probleme möglich ist und dass die Feinverteilung und die Dispergierung von grobkristallinen Rohpigmenten in einer Stufe gelingt.

Die nach der vorliegenden Erfindung erhältlichen Pigmentpräparationen zeichnen sich aus durch ihre hervorragenden coloristischen und rheologischen Eigenschaften, insbesondere durch hohe Flockungsstabilität, leichte Dispergierbarkeit, gutes Absetz- und günstiges Glanzverhalten, hohe Farbstärke und Lagerstabilität.

Die erfindungsgemäß hergestellten Pigmentpräparationen lassen sich zum Pigmentieren von natürlichen oder synthetischen hochmolekularen organischen Materialien, wie beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, beispielsweise Aminoplaste, insbesondere Harnstoff- und Melamin-Formaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Latices, Silikone und Silikonharze, einzeln oder in Mischungen.
Dabei spielt es keine Rolle, ob die erwähnten hochmolekularen organischen Verbindungen als plastische Massen, Gießharze, Pasten, Schmelzen oder in Form von Spinnlösungen, Lacken, Lasuren, Schäumen, Tuschen, Tinten, Beizen, Anstrichstoffen, Dispersionsfarben oder Druckfarben vorliegen.

Die erfindungsgemäß hergestellten Pigmentpräparationen sind auch geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner, Flüssigtoner, Polymerisationstoner sowie Spezialtoner. Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Des weiteren sind die erfindungsgemäß hergestellten Pigmentpräparationen geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.
Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäß hergestellten Pigmentpräparationen als Farbmittel in Ink-Jet Tinten auf wässriger und nichtwässriger Basis sowie in solchen Tinten, die nach dem hot-melt-Verfahren arbeiten, geeignet.

Darüber hinaus sind die erfindungsgemäß hergestellten Pigmentpräparationen auch als Farbmittel für Farbfilter, sowohl für die subtraktive als auch für die additive Farberzeugung, geeignet.

Zur Beurteilung der Eigenschaften der nach der vorliegenden Erfindung erzeugten Pigmentpräparationen auf dem Gebiet der wässrigen Dispersionsfarben wurde eine Dispersionsfarbe auf Polyvinylacetatbasis (PVA-Dispersionsfarbe) ausgewählt.
Die Bestimmung der Farbstärke und des Farbtons erfolgt nach DIN 55986.
Die Bestimmung der Kristallphase erfolgte durch Röntgenspektroskopie. Die Aufnahme der Röntgenspektren erfolgte mit CuKα-Strahlung.
Die Bestimmung der mittleren Teilchendurchmesser D₅₀ der grobkristallinen Rohpigmente erfolgte durch Laserlichtbeugung.
Die Bestimmung der mittleren Teilchendurchmesser D₅₀ der Pigmente in den Pigmentpräparationen erfolgte durch graphische Auswertung von elektronenmikroskopischen Aufnahmen.

Im vorangegangenen Text und in den nachstehenden Beispielen beziehen sich Teile jeweils auf Gewichtsteile und Prozent jeweils auf Gewichtsprozent der so beschriebenen Substanzen.

### Beispiel 1

3800 Teile eines handelsüblichen Pigments P.R.168, 400 Teile eines 5-kernigen Nonylphenolkondensats aus Formaldehyd und Nonylphenol und 600 Teile eines ethoxylierten Oleylalkohols werden in 2500 Teilen Ethylenglykol und 2700 Teilen Wasser verrührt. Diese Suspension wird mit einem Druck von 3800 bar in einem Zweistrahl-Mikrojetreaktor durch die frontal sich gegenüberstehenden Düsen aufeinander gespritzt. Die Düsen haben jeweils einen Durchmesser von 100 µm, die Strahlen treffen sich im Gasraum. Durch Druckluft wird die Suspension aus dem Mikrojetreaktor herausgefördert. Es werden insgesamt 5 Passagen gefahren. Es entsteht eine farbstarke Pigmentpräparation.

## Patentansprüche

1. Verfahren zur Herstellung von flüssigen Pigmentpräparationen, **dadurch gekennzeichnet, dass** man eine 10 bis 80 gew.-%ige Suspension eines Rohpigments, Präpigments und/oder Pigments, bezogen auf das Gesamtgewicht der Suspension, in einem flockungsstabilisierenden, flüssigen Medium, in einem Mikrojetreaktor durch Düsen in einem von einem Gehäuse umschlossenen Reaktorraum auf einen gemeinsamen Kollisionspunkt spritzt, wobei über eine Öffnung im Gehäuse in den Reaktorraum ein Gas oder eine verdampfende Flüssigkeit zur Aufrechterhaltung einer Gasatmosphäre im Reaktorraum eingeleitet wird und die entstehende flüssige Pigmentpräparation und das Gas oder die verdampfte Flüssigkeit durch eine weitere Öffnung im Gehäuse durch Überdruck auf der Gaseintrittsseite oder durch Unterdruck auf der Produkt- und Gasaustrittsseite aus dem Reaktor entfernt wird.

2. Verfahren nach Anspruch 1, **dadurch gekennzeichnet, dass** die Roh-, Prä- und/oder Pigmentkonzentration in der Suspension 20 bis 60 Gew.-%, vorzugsweise 30 bis 50 Gew.-%, ist.

3. Verfahren nach Anspruch 1 oder 2, **dadurch gekennzeichnet, dass** die Suspension mit einem Druck von mindestens 50 bar, bevorzugt 500 bis 5000 bar, in den Reaktorraum gespritzt wird.

4. Verfahren nach mindestens einem der Ansprüche 1 bis 3, **dadurch gekennzeichnet, dass** die Temperatur der Suspension -50 bis 250°C, vorzugsweise 0 bis 180°C, beträgt.

5. Verfahren nach mindestens einem der Ansprüche 1 bis 4, **dadurch gekennzeichnet, dass** das flockungsstabilisierende, flüssige Medium aus einem oder mehreren Trägermaterialien aus der Gruppe der pigmentären oder nichtpigmentären Dispergiermittel, Harze, Weichmacher, und Mischungen davon; und gegebenenfalls aus Wasser und/oder einem oder mehreren organischen Lösemitteln, und gegebenenfalls aus einem oder mehreren Hilfsmitteln, besteht.

6. Verfahren nach Anspruch 5. **dadurch gekennzeichnet, dass** das Hilfsmittel ein Füllstoff, Stellmittel, Wachs, Entschäumer, Extender, Konservierungsmittel, Trocknungsverzögerungsmittel, Additiv zur Steuerung der Rheologie, Netzmittel, Antioxidant, UV-Absorber, Lichstabilisator oder eine Kombination davon, ist.

7. Verfahren nach mindestens einem der Ansprüche 1 bis 6, **dadurch gekennzeichnet, dass** das flockungsstabilisierende flüssige Medium ein Novolak, Alkydmelaminharz, Acrylmelaminharz, Polyurethanharz, Diisodecylphthalat, Dioctylphthalat, Fettaminpolyglykolether, Fettsäuretaurid, Fettalkoholpolyglykolether, Fettsäurepolyglykolester, Fettsäure-N-methyltaurid, Fettsäuresarkosid, Fettsäureisethionat, Alkylphenolpolyglykolether, Alkylnaphthalinsulfonat, Alkylphenylsulfonat, Alkylphenolpolyglykolethersulfat, Fettalkoholpolyglykolethersulfat, Fettaminacetat; oder eine Mischung dieser Verbindungen mit Wasser und/oder einem Lösemittel aus der Gruppe der Alkohole, Glykole, Glykolether, Polyglykole, Polyole, Polyetherpolyole, der aromatischen Lösemittel, Ketone und Ester.

8. Verfahren nach mindestens einem der Ansprüche 1 bis 7, **dadurch gekennzeichnet, dass** Rohpigmente, Präpigmente und/oder Pigmente aus der Gruppe der Perylen-, Perinon-, Chinacridon-, Chinacridonchinon-, Anthrachinon-, Anthanthron-, Benzimidazolon-, Disazokondensations-, Azo-, Indanthron-, Phthalocyanin-, Triarylcarbonium-, Dioxazin-, Aminoanthrachinon-, Diketopyrrolopyrrol-, Indigo-, Thioindigo-, Thiazinindigo-, Isoindolin-, Isoindolinon-, Pyranthron-, Isoviolanthron-, Flavanthron-, Anthrapyrimidinpigmente oder Mischkristalle daraus; oder Carbon Black- (Ruß), Titandioxid-, Zinksulfid-, Zinkoxid-, Eisenoxid-, Chromoxid-, Mischmetalloxid-, Cadmium-, Wismuth-, Chromat-, Ultramarin- und Eisenblaupigmente; oder Mischungen daraus eingesetzt werden.

9. Verfahren nach mindestens einem der Ansprüche 1 bis 8, **dadurch gekennzeichnet, dass** die eingesetzte Suspension mit 1 bis 15, vorzugsweise 1 bis 10, Passagen durch den Mikrojetreaktor gepumpt wird oder dass die Suspension im Kreislauf durch den Mikrojetreaktor gepumpt wird.

10. Verfahren nach mindestens einem der Ansprüche 1 bis 9, **dadurch gekennzeichnet, dass** das Gas Luft, Stickstoff oder Kohlendioxid ist.

11. Verfahren nach mindestens einem der Ansprüche 1 bis 10, **dadurch gekennzeichnet, dass** der gemeinsame Kollisionspunkt in einem materialfernen Bereich des Reaktorraums liegt.

12. Verfahren nach mindestens einem der Ansprüche 1 bis 11, **dadurch gekennzeichnet, dass** die Roh-, Prä- und/oder Pigmentsuspension durch zwei, drei oder mehrere Düsen auf einen gemeinsamen Kollisionspunkt gespritzt wird.
